# EUROPEAN PATENT APPLICATION

(11) **EP 1 672 478 A2**
(43) Date of publication of application: **21.06.2006**
(21) Application number: 05112138.2
(22) Date of filing: 14.12.2005
(51) Int. Cl.: G06F 3/12

(54) **A printing apparatus**

(30) Priority: 16.12.2004 KR 2004106750
(71) Applicant: Samsung Electronics Co., Ltd., Yeongtong-gu Suwon-city, Gyeonggi-do 442-742 (KR)
(72) Inventor: HAN, Yu-rim, Gyeonggi-do (KR); LEE, Jae-pyoung, Gyeonggi-do, (KR)
(74) Representative: Jackson, Jonathan Andrew

(57) **Abstract**

A printer and associated controller is described. The printer allows an end-user to set the paper feed standby time so as to reduce the amount of time the user has to wait for a printing operation when using the manual sheet feed. Also, the controller which allows the user to set the paper feed standby time is described.

## Description

The present invention relates to a printing apparatus.

A printing apparatus generally operates to output internally-generated data file or externally-received data file onto a sheet of printing paper, using a developing agent such as toner. General printing apparatuses mainly include printers, copiers, facsimiles, and multi-function peripherals (MFP) having respective functions of the printing apparatuses.

A printing control apparatus controls the printing apparatuses to perform a printing operation to output a data file onto the printing paper. A general example of the printing control apparatus includes a personal computer.

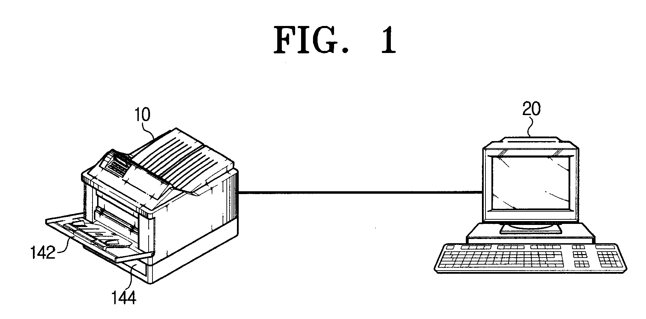

Figure 1 shows a general printing apparatus being connected with a printing control apparatus. Referring to Figure 1, the printing apparatus, such as a printer 10, is connected to the printing control apparatus, such as a PC 20. The PC 20 transmits a file for printing to the printer 10, and controls the printer 10 to output the received file onto the printing paper.

The printer 10 is supplied with the printing paper to output the received file from the PC 20. To supply the printing paper, the printer 10 is provided with a manual paper feed part 142 and a paper feed tray 144. The manual paper feed part 142 is loaded with the printing paper when a user selects a manual feed mode. The paper feed tray 144 may include several trays to accommodate various sizes of printing papers therein, respectively. The sizes of the printing papers generally include A4, A5, B5 and B4.

More specifically, the user selects a desired paper feed source and paper size to print out a file from the PC 20. The user may select at least one of automatic paper feed selection, manual paper feed, and tray selection. When the selection is completed, the PC 20 transmits the file for printing to the printer 100 according to the selection. The printer 10 then outputs the received file onto the printing paper of the selected size from the selected paper source.

When the manual paper feed is selected as the desired paper feed source, the user has to load the manual paper feed part 142 with the printing paper, and press a print start button of the printer 10 to issue a printing command. The printer 100 outputs the received file onto the printing paper loaded on the manual paper feed part 142, only when the manual paper feed part 142 is loaded with the printing paper, and the printing command is received. In the absence of the printing command, the printer 10 outputs the received file onto the printing paper after a preset paper feed standby time which is usually set by the manufacturer of the printing apparatus and the printing control apparatus. Once set by the manufacturer, such a paper feed standby time is not adjustable thereafter.

Accordingly, the user has to press a print start button to execute the printing operation immediately. If the user does not press the print start button, the printer 10 waits until the preset paper feed standby time elapses, and therefore, the user has to wait a longer time than necessary to print the file.

The present general inventive concept provides a printing control apparatus capable of setting a paper feed standby time during a printing operation to perform a manual paper feed, so as to prevent the inconvenience of having to press a print start button to execute the printing operation, and a method of setting the paper feed standby time.

The present general inventive concept provides a printing control apparatus which is capable of setting a paper feed standby time during a printing operation in a manual paper feed mode, by enabling a user to re-adjust the paper feed standby time, and a method of setting the paper feed standby time.

Additional aspects and advantages of the present general inventive concept will be set forth in part in the description which follows and, in part, will be obvious from the description, or may be learned by practice of the general inventive concept.

According to a first aspect of the present invention, there is provided a printing apparatus having a manual feed for printing media wherein a sheet of the media is loaded into the apparatus after expiration of a feed standby time which is commenced following the reception of a command to print, the apparatus comprising means operable to allow a user to set the feed standby time of the printer.

According to another aspect, there is provided a printer control apparatus operable to control the printing apparatus of the first aspect, the control apparatus comprising user input means operable to generate the feed standby time and the command to print in accordance with a user input and an interface operable to transmit the feed standby time and the command to print to said printing apparatus.

The above and/or other aspects of the present general inventive concept may be achieved by providing a printing control apparatus to control a printing apparatus, the printing control apparatus including a printer driver which transmits a document to print and generates or sets a command regarding a preset paper feed standby time, and a communication interface which outputs the transmitted document and the generated command regarding the paper feed standby time to the printing apparatus.

The printer driver may provide registration information of the printing apparatus to set the paper feed standby time, the registration information including a window for a user to set the paper feed standby time.

The command generated regarding the paper feed standby time may include PJL (Printer Job Language). The printing control apparatus may include a display part to display the registration information of the printing apparatus which includes the window to set the paper feed standby time.

The printing control apparatus may include a key input part to set the paper feed standby time through the window.

The printing control apparatus may converts the document into data interpretable by the printing apparatus and compresses the converted data.

The above and/or other aspects of the present general inventive concept may also be achieved by providing a method of setting a paper feed standby time in a printing control apparatus to control a printing apparatus, the method including transmitting a document to print and generating a command regarding a preset paper feed standby time, and transmitting the transmitted document and the command regarding the paper feed standby time to the printing apparatus.

The method may further include providing registration information of the printing apparatus to set the paper feed standby time, the registration information including a window through which the paper feed standby time is set. The command generated regarding the paper feed standby time may include PJL (Printer Job Language). The method may further include displaying the registration information of the printing apparatus which includes the window to set the paper feed standby time which is provided by a printer driver.

The method may further include setting the paper feed standby time through the window.

The method may further include converting the document into data interpretable by the printing apparatus and compressing the converted data.

The above and/or other aspects of the present invention general inventive concept may also be achieved by providing a printing system having a printing control apparatus to set a paper feed standby time, to generate a document and a command regarding the set paper feed standby time corresponding to the document, and to output the document and the command regarding the paper feed standby time, and a printing apparatus to receive the document and the command regarding the paper feed standby time, and to print the document according to the command on a sheet of printing paper.

The above and/or other aspects of the present invention general inventive concept may also be achieved by providing a printing apparatus usable with a printing control apparatus in a printing system, the printing apparatus comprising a control unit to receive a document and a command regarding a paper feed standby time corresponding to the document, and_a print part to print the document on a sheet of printing paper according to the command of the paper feed standby time.

The above and/or other aspects of the present invention general inventive concept may also be achieved by providing a computer readable recording medium comprising executable codes to perform a method of controlling a paper feed standby time, the method comprising setting a paper feed standby time and generating a document and a command regarding the set paper feed standby time corresponding to the document, receiving the document and the command regarding the paper feed standby time, and printing the document according to the command on a sheet of printing paper.

An embodiment of the present invention will now be described, by way of example only and with reference to the accompanying drawings, in which:
Figure 1 is a view illustrating a general printing apparatus connected with a printing control apparatus;
Figure 2 is a block diagram illustrating a printing apparatus and a printing control apparatus according to an embodiment of the present general inventive concept;
Figure 3 is a view illustrating printer registration information window, which is displayed to set a paper feed standby time of the printing control apparatus of FIG. 2; and
Figure 4 is a flowchart illustrating a paper feed standby time setting method of a printing control apparatus according to an embodiment of the present general inventive concept.

In the accompanying drawings, like reference numerals refer to the like elements throughout. The embodiments are described below in order to explain the present general inventive concept by referring to the figures.

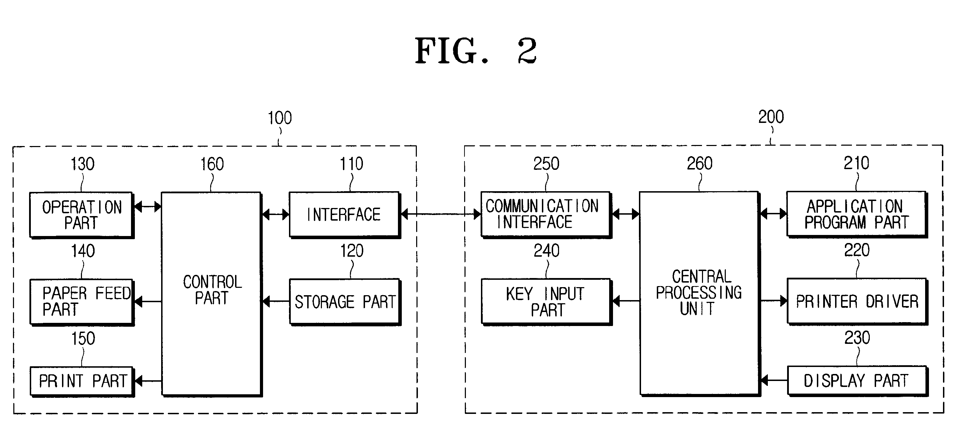

Figure 2 is a block diagram illustrating a printing system having a printing apparatus, such as a printer 100, and a printing control apparatus, such as a PC 200, according to an embodiment of the present general inventive concept.

Referring to Figure 2, the printer 100 includes an interface 110, a storage part 120, an operation part 130, a paper feed part 140, a printing part 150, and a control part 160.

The interface 110 receives from the PC 200 print data, and one or more printing commands regarding one or more additional selections. The storage part 120 stores the print data and additional selections which are received through the interface 110. The operation part 130 includes a print start button to enable a user to issue a printing command. The paper feed part 140 supplies a sheet of printing paper during a printing operation and may include a manual paper feed part 142 and a paper feed tray 144 of the printer 10 of Figure 1. The printing part 150 outputs the received print data, which is stored in the storage part 120, onto the printing paper which is fed by the paper feed part 140.

The control part 160 stores the print data and printing command, which are received through the interface 110, in the storage part 120. The control part 160 converts the stored print data into a printable document by decompressing the print data, and interprets the printing command. According to the printing command as interpreted, the control part 160 determines whether to select a manual paper feed (or a manual paper feed mode) or not. When the manual printing paper feed is selected, the control part 160 controls the manual paper feed part 142, in accordance with the determination of whether the preset paper feed standby time has elapsed, to supply the printing paper to the printing part 150. When the printing paper is supplied, the control part 160 controls the printing part 150 to print a document corresponding to the print data onto the supplied printing paper.

The PC 200 may include an application program part 210, a printer driver 220, a display part 230, a key input part 240, a communication interface 250, and a central processing unit 260.

The application program part 210 provides application programs for the user to write (create or generate) print data corresponding to a document to be printed. The printer driver 220 converts the print data into data that is understood by the printer 100, and compresses the data. Additionally, the printer driver 220 provides a user with printer registration information which contains therein a window through which the paper feed standby time is set. When the user sets the paper feed standby time of the printer 100, the printer driver 220 generates a command regarding the set paper feed standby time. Here, the command regarding the paper feed standby time generated by the printer driver 220 is formed with printer job language (PJL).

The display part 230 displays the application programs provided by the application program part 210 for the user to write the document. Additionally, the display part 230 displays the printer registration information which is provided from the printer driver 220 and contains therein the window to set the paper feed standby time.

The key input part 240 may include a plurality of numeral keys, symbol keys, Korean letter keys, English letter keys for the user to write the document. The key input part 240 includes a selection key so that the user can select the desired paper source, paper size and paper feed standby time.

The communication interface 250 provides an interface to communicate with the interface 110 of the printer 100. The communication interface 250 transmits the print data, which is converted by the printer driver 220, to the interface 110 of the printer 100. Additionally, the communication interface 250 transmits the command, which is generated by the printer driver 220, to the interface 110 of the printer 100.

The central processing unit 260 controls the application program unit 210 to provide the application program for the user to write the document, and a display of the display part 230 to display the document. When the document is completed, the central processing unit 260 controls the printer driver 220 to convert the document into data which is understood by the printer 100, and compresses the data.

Additionally, the central processing unit 260 controls the printer driver 220 to display the printer registration information through the display part 230. When the user sets the paper feed standby time using the key input part 240, the central processing unit 260 controls the printer driver 220 to generate the command regarding the set paper feed standby time. The central processing unit 260 operates so that the converted printing data and the generated command are transmitted to the interface 100 of the printer 110 via the communication interface 250.

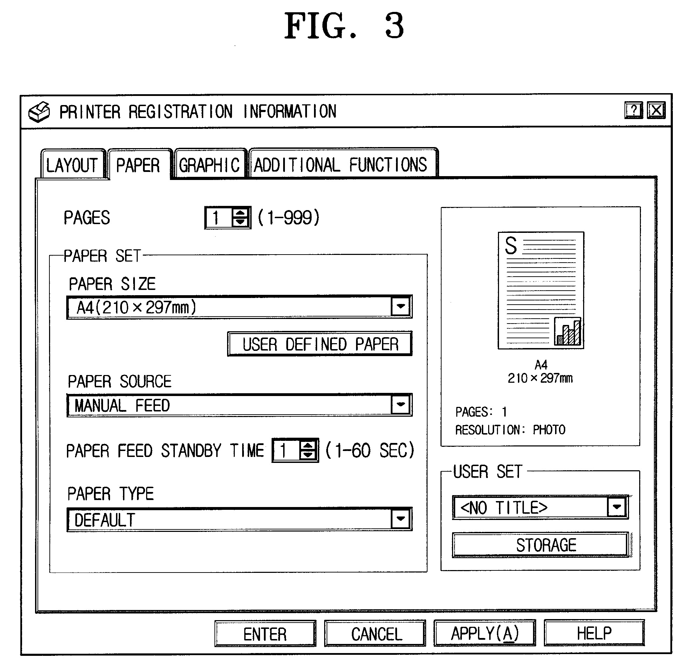

Figure 3 is a view illustrating a printer registration information window which is displayed for the user to set the paper feed standby time of the printing control apparatus of Figure 2.

Referring to Figures 2 and 3, the printer registration information window is provided by the printer driver 220, and displayed through the display part 230. When the user completes the document which is to be printed, and clicks a printing icon among icons of the application programs by using the key input part 240, or selects a printing operation from a menu provided by the application program, the printer driver 220 provides the printer registration information.

As the "paper" tab is selected from among tabs provided in the registration information window of the printer 100, options for the printing paper appear. The printing paper options may include pages, sizes, sources and types of the printing paper. The user is therefore enabled to select at least one of the number of the pages, one of the sizes, one of the sources, and one of the types of the printing paper. The user may also select the manual paper feed as the paper source using the key input part 240. The paper feed standby time may range from about 1 to about 60 seconds. Accordingly, the user can select the paper feed standby time within an allowable range of the paper feed standby time using the key input part 240.

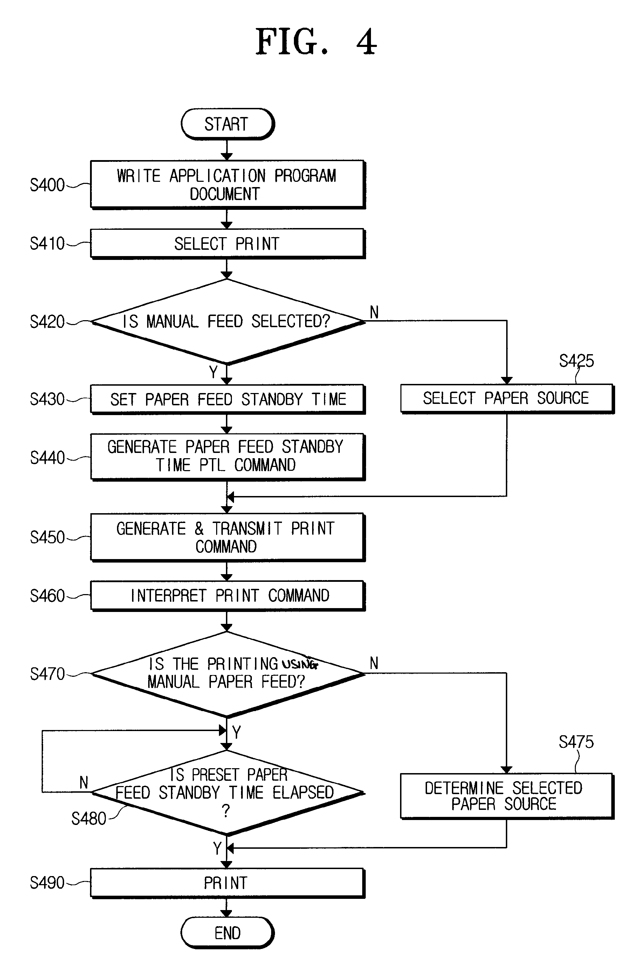

Figure 4 is a flowchart illustrating a method of setting paper feed standby time of a printing control apparatus according to an embodiment of the present general inventive concept.

Referring to Figure 4, the method of setting the paper feed standby time mainly includes operations S400 to S450 for preparation, and operations S460 to S490 for an actual printing operation of the printer 100.

Referring to Figures 2, 3, and 4, the user writes the document to be printed, in the application programs by using the key input part 240 (S400). The application programs are provided from the application program part 210 according to the control of the central processing unit 260.

When the document to be printed is completed or prepared the user selects, using the key input part 240, the print start option from the menu or icon which is provided by the application programs (S410). When the print start option is selected, the printer driver 220 converts the document into the data which is understood by the printer 100, and compresses the data. The printer driver 220 then provides the printer registration information according to the operation of the central processing unit 260. The printer registration information provided by the printer driver 220 is displayed through the display part 230.

The central processing unit 260 determines as to whether the manual paper feed is selected or not (S420). The user selects the "paper" tab from the window of the printer registration information, using the key input part 240. The user also selects, using the key input part 240, the manual paper feed as the paper source from the "paper" tab.

Instead of the manual paper feed, the user may select other types of paper sources (S425). The paper sources may include the manual paper feed, automatic selection (automatic selection mode), tray 1, tray 2, and a plurality of trays according to each paper size.

When the manual paper feed is selected, the user sets the paper feed standby time from a paper feed standby time item in the "paper" tab, using the key input part 240 (S430). The paper feed standby time may range approximately from 1 second to 60 seconds. Figure 3 illustrates the range of the paper feed standby time from 1 second to 60 seconds, but the present general inventive concept is not limited thereto. The range of the paper feed standby time may be shorter or longer if necessary.

When the paper feed standby time is set, the printer driver 220 generates the command regarding the paper feed standby time as set (S440). The printer driver 220 generates the command for the paper feed standby time according to a printer operation language so that the printer 100 can interpret the same.

When the setting is completed, the central processing unit 260 generates the print command and controls the communication interface 250 so as to transmit the print command to the interface 110 of the printer 100 together with the processed data (S450). The print command may include the manual paper feed selection, and the command regarding the paper feed standby time.

The control part 160 interprets the print command (S460). The control part 160 stores the print command and the print data received through the interface 110 in the storage part 120. The control part 160 then interprets the print command.

The control part 160 determines whether the printing operation is performed using the manual paper feed or not based on the interpreted print command (S470).

When determining that the manual paper feed is not selected, the control part 160 determines which paper source is selected in operation S425 (S475).

When determining the manual paper feed, the control part 160 determines whether a preset paper feed standby time has elapsed or not (S480). The control part 160 acknowledges the preset paper feed standby time according to the interpreted print command.

When it is determined that the preset paper feed standby time has elapsed, the control part 160 controls the print part 150 to print out the document onto the printing paper (S490). The print part 160 converts the data stored in the storage part 120 into a printable document by data de-compression. The control part 160 then controls the manual paper feed part 142 to supply the printing paper to the print part 150.

According to the present embodiment, the printer 100 receives information about at least one of the date to be printed, the manual paper feed, and the command regarding the paper feed standby time from the PC 200, and includes a printing unit to print the data on the printing paper according to the information. The control part 160 of the printer 100 may have the above-described operations of the PC 200 to set the manual paper feed and the command regarding the paper feed standby time.

The present general inventive concept can be realised as a method, an apparatus, or a system. When the present general inventive concept is manifested in computer software, components of the present general inventive concept may be replaced with code segments that are necessary to perform the required action. Programs or code segments may be stored in media readable by a processor, and transmitted as computer data that is combined with carrier waves via a transmission media or a communication network.

The media readable by a processor include anything that can store and transmit information, such as, electronic circuits, semiconductor memory devices, ROM, flash memory, EEPROM, floppy discs, optical discs, hard discs, optical fiber, radio frequency (RF) networks, etc. The computer data also includes any data that can be transmitted via an electric network channel, optical fiber, air, electro-magnetic field, RF network, etc.

As described above, the user does not have to press the print start button to print the document. Additionally, as the setting of the paper feed standby time is simplified, the user can set the paper feed standby time with ease, and the overall printing time can be shortened.

Although a few embodiments of the present general inventive concept have been shown and described, it will be appreciated by those skilled in the art that changes may be made in these embodiments without departing from the principles of the general inventive concept, the scope of which is defined in the appended claims.

## Claims

1. A printing apparatus (100) having a manual feed (140) for printing media wherein a sheet of the media is loaded into the apparatus (100) after expiration of a feed standby time, the feed standby time commencing after the reception of a command to print, the apparatus (100) comprising means (110) operable to allow a user to set the feed standby time of the printer.

2. A printer control apparatus (200) operable to control the printing apparatus (100) of claim 1, the control apparatus (200) comprising user input means (240) operable to generate the feed standby time and the command to print in accordance with a user input and an interface (250) operable to transmit the feed standby time and the command to print to said printing apparatus (100).

3. A printing control apparatus to control a printing apparatus, comprising:
a printer driver which transmits a document to print and generates a command regarding a paper feed standby time; and
a communication interface which transmits the transmitted document and the command regarding the paper feed standby time to the printing apparatus.

4. The printing control apparatus of claim 3, wherein the printer driver provides registration information of the printing apparatus to set the paper feed standby time, and the registration information comprises a window through the paper feed standby time is set.

5. The printing control apparatus of claim 4, further comprising:
a display part which displays the registration information of the printing apparatus and includes the window to set the paper feed standby time.

6. The printing control apparatus of claim 4, further comprising:
a key input part which sets the paper feed standby time through the window.

7. The printing control apparatus of claim 3, wherein the command generated regarding the paper feed standby time comprises PJL (Printer Job Language).

8. The printing control apparatus of claim 3, wherein when the communication interface transmits data corresponding to the document, the data is converted into data interpretable by the printing apparatus and the converted data .

9. A method of a printing control apparatus to control a printing apparatus, the method comprising:
transmitting a document to print and generating a command regarding a paper feed standby time; and
transmitting the transmitted document and the command regarding the paper feed standby time to the printing apparatus.

10. The method of claim 9, comprising:
providing registration information of the printing apparatus to set the paper feed standby time, the registration information including a window through which the paper feed standby time is set.

11. The method of claim 10, further comprising:
displaying the registration information of the printing apparatus which includes the window to set the paper feed standby time which is provided by a printer driver to the printing apparatus.

12. The method of claim 10, further comprising:
setting the paper feed standby time through the window.

13. The method of claim 9, wherein the command generated regarding the paper feed standby time comprises PJL (Printer Job Language).

14. The method of claim 9, further comprising:
converting the document into data interpretable by the printing apparatus and compressing the converted data.

15. A printing system, comprising:
a printing control apparatus comprising:
a central processing unit to set a paper feed standby time and to generate a document and a command regarding the set paper feed standby time corresponding to the document, and
a communication interface to output the document and the command regarding the paper feed standby time; and
a printing apparatus comprising:
a control unit to receive the document and the command regarding the paper feed standby time, and
a print part to print the document according to the command on a sheet of printing paper.

16. A printing system, comprising:
a printing control apparatus to set a paper feed standby time, to generate a document and a command regarding the set paper feed standby time corresponding to the document, and to output the document and the command regarding the paper feed standby time; and
a printing apparatus to receive the document and the command regarding the paper feed standby time, and to print the document according to the command on a sheet of printing paper.

17. A printing apparatus usable with a printing control apparatus in a printing system, comprising:
a control unit to receive a document and a command regarding a paper feed standby time corresponding to the document; and
a print part to print the document on a sheet of printing paper according to the command of the paper feed standby time.

18. The printing apparatus of claim 16, wherein the control unit receives a second document and a second command regarding a second paper feed standby time corresponding to the document, and the printing part prints the second document on a second sheet of printing paper according to the second command of the second paper feed standby time.

19. The printing apparatus of claim 18, wherein the second paper feed standby time is different from the first paper standby time.

20. The printing apparatus of claim 18, wherein the print part comprises a manual paper feed tray, and the second paper feed standby time and the paper feed standby time are defined by a period between a first time when the first sheet of printing paper and the second sheet of printing paper are loaded on the manual paper feed tray and a second time when the first sheet of printing paper and the second sheet of printing paper are picked up to be printed with the document.

21. The printing apparatus of claim 18, wherein the first command and the second command comprise a command to select a manual paper feed, and the printing part comprises a manual paper feed tray on which the sheet of the printing paper and the second sheet of the printing paper are loaded.

22. The printing apparatus of claim 17, wherein the print part comprises a manual paper feed tray, and the paper feed standby time is defined by a period between a first time when the first sheet of printing paper is detected on the manual paper feed tray and a second time when the first sheet of printing paper is picked up to be printed with the document.

23. The printing apparatus of claim 17, wherein the paper feed standby time is variable.

24. A method of a printing system, the method comprising:
receiving a document and a command regarding a paper feed standby time corresponding to the document; and
printing the document on a sheet of printing paper according to the command of the paper feed standby time.

25. A computer readable recording medium comprising executable codes to perform a method of controlling a paper feed standby time, the method comprising:
transmitting a document to print and generating a command regarding a paper feed standby time; and
transmitting the transmitted document and the command regarding the paper feed standby time to the printing apparatus.

26. A computer readable recording medium comprising executable codes to perform a method of controlling a paper feed standby time, the method comprising:
setting a paper feed standby time and generating a document and a command regarding the set paper feed standby time corresponding to the document; and
receiving the document and the command regarding the paper feed standby time, and printing the document according to the command on a sheet of printing paper.
